(19) **Europäisches Patentamt**

**European Patent Office**

**Office européen des brevets**

(11) **EP 0 613 394 B1**

(12) **EUROPEAN PATENT SPECIFICATION**

(45) Date of publication and mention
of the grant of the patent:
**08.07.1998 Bulletin 1998/28**

(21) Application number: **92920066.5**

(22) Date of filing: **31.08.1992**

(51) Int. Cl.$^6$: **B01D 29/88**, B01D 17/04,
B01D 46/24, B01D 39/20

(86) International application number:
**PCT/US92/07383**

(87) International publication number:
**WO 94/05396 (17.03.1994 Gazette 1994/07)**

(54) **CONICAL COALESCING FILTER**

KONISCHER KOALESZIERFILTER

FILTRE A COALESCENCE CONIQUE

(84) Designated Contracting States:
**AT BE CH DE DK ES FR GB GR IE IT LI LU MC NL
SE**

(43) Date of publication of application:
**07.09.1994 Bulletin 1994/36**

(73) Proprietor:
**POROUS MEDIA CORPORATION
St.Paul, MN 55110 (US)**

(72) Inventor: **SPEARMAN, Michael, R.
St. Paul, MN 55110 (US)**

(74) Representative:
**Abbie, Andrew Kenneth et al
R.G.C. Jenkins & Co.
26 Caxton Street
London SW1H 0RJ (GB)**

(56) References cited:
GB-A- 1 088 029     GB-A- 1 501 554
US-A- 2 864 505     US-A- 3 460 680
US-A- 3 481 476     US-A- 4 038 194
US-A- 4 309 289     US-A- 4 892 667

- **Gas Processors Association: Engineering Data
Book; Tenth edition 1987, Volume 1 Section 7:
Separation and Filters**

Remarks:
The file contains technical information submitted
after the application was filed and not included in
this specification

## Description

The present invention relates to coalescing filter assemblies and coalescing filter elements therefor.

The need to separate liquid droplets from gases or other liquids is long standing in the art. Common liquids found in air and gas streams include lube oils, water, salt water, acids, caustics, hydrocarbons, completion fluids, glycol and amine. The liquid normally is present in the form of tiny droplets, or aerosols. The size distribution of the aerosols is primarily dependent on the surface tension of the liquid contaminant and the process from which they are generated. As the surface tension is reduced, the size of the aerosol is reduced accordingly. This is because the intermolecular cohesive forces (the forces which attract the surface molecules of an aerosol inward in order to minimize surface area with respect to volume) are weaker.

It has been found that greater than 50% of all oil aerosols by weight are less than 1 micrometer in diameter. Due to their similar surface tensions, the same holds true for glycols, amines and hydrocarbons. Conventional filtration/separation equipment such as settling chambers, wire mesh (impingement) separators, centrifugal or vane (mechanical) separators and coarse glass or cellulose filters are only marginally efficient at 1 micrometer, and remove virtually none of the prevalent sub-micrometer aerosols and particles. In order to remove these problem-causing contaminants, high efficiency coalescing filters must be used.

All previous coalescing filters and coalescing elements of the type with which the present invention is concerned are configured in a tubular, cylindrical arrangement, and used to flow in to out or, from out to in. While it is advantageous to flow from out to in for many filter applications, there is also a definite advantage for flowing in to out for the coalescing of liquid droplets and aerosols from gases, or the coalescing of two immiscible liquid phases.

In these applications, it is common to use coalescing elements secured within a pressure-containing vessel or housing to form a coalescing filter assembly. The continuous phase gas or liquid contains dispersed liquid aerosol droplets, sometimes referred to as the discontinuous phase. The mixture enters the assembly through an inlet connection and then flows to the inside of the coalescing element. As the fluid flows through the filter media of the coalescing element, the liquid droplets come in contact with the fibers in the media and are removed from the fluid stream. Within the media, the droplets coalesce with other droplets and grow to emerge as large droplets on the downstream surface of the element which are capable of being gravitationally separated from the primary, or continuous, phase fluid. If the density of the droplets is greater than that of the fluid, such as oil droplets in air, the droplets will settle gravitationally to the bottom of the filter assembly, countercurrent to the upward flow of air. If the density of the droplets is less than that of the fluid, such as oil droplets in water, the droplets will rise to the top of the assembly countercurrent to the downward flow of the water.

The droplet size, droplet density, fluid viscosity, and fluid density will determine how rapidly the droplet settles or rises in the filter assembly. It is advantageous in designing coalescing filter assemblies to try to maximize the flow rate of the fluid through the assembly while not reducing separation efficiencies in order to reduce the size of the housing required for a given flow rate, and thereby reduce the manufacturing costs.

However, the cylindrical coalescing elements of the prior art impose substantial limiting factors in designing filter housings. The cylindrical configuration of the coalescing elements provides a fixed annular space between the element and the housing wall. Therefore, assuming substantially even flow distribution across the surface of the coalescing element, the annular velocity increases linearly from the bottom to the top of the element.

With the cylindrical element design, the annular velocity will be different at all points along the axial length of the element. For example, in separating oil droplets from a gas, the gas will flow upward upon exiting the element, and the liquid droplets will settle downward. At the bottom of the element there would be no flow, so the annular velocity would be zero. At the top of the element, all of the gases would have exited the element and be flowing upward. The annular velocity would be 100% of the flow divided by the cross sectional open area (the area between the element and the vessel wall). Similarly, at a point in the middle of the element the annular velocity would be 50% of the total flow divided by the cross sectional open area. Great care must be taken not to exceed the annular velocity which will cause reentrainment of the droplets.

Furthermore, the pressure drop which results from the gas entering the open end of the element is a function of the inside diameter of the element. The inside diameter of cylindrical elements is limited by the diameter of the housing, the thickness of the wall of the element, and the size of the annular space. It is necessary to maintain sufficiently low annular velocities so as not to reentrain liquid droplets. The smaller the inside diameter is, the higher the pressure drop will be for a given flow rate.

After much study of the problem of how to reduce the annular velocity to prevent reentrainment of the liquid droplets, we devised a substantially conically shaped coalescing filter element whereby the open area between the wall of the housing and the filter element increases in the direction of flow. The annular velocity can be expressed as $V_a = Q/A_x$ where Q is the flow and A is the open cross sectional area. It can be seen that if the area between tee filter element and the housing increases as the flow increases, the annular velocity may be made to remain constant or, if desired, even to decrease.

Once the idea of a conical coalescing filter was developed, a search of the prior art in the United States Patent and Trademark Office was made to determine if this was new. The only patent located which discloses a conical coalescing element is U.S.-A-2,823,760 to S. K. Anderson entitled "Water Separator". Other patents were located during the search, but were not relevant. Upon close study of the Anderson "Water Separator", there was found to be a similarity in appearance only. Anderson deals with maintaining a constant pressure. It is not an in to out coalescer, and in fact is a centrifugal coalescer which is mounted inside a housing having inlet means and outlet means to flow out-to-in, and relies on centrifugal force and subsequent steady flow rate to separate the coalesced droplets from the primary phase fluid. Thus even though Anderson thought of making a conically shaped coalescing filter cartridge, he did so for an entirely different purpose, and did not solve the problems in the coalescing filter art which Applicant addresses.

The present invention solves the problem in the prior art by providing a conical coalescing filter element which may be used in virtually any coalescing filter assembly, depending on the application, to separate liquid drops from gases or other liquids. Such a configuration allows for lower velocities of the primary phase fluid in the area between the outside surface of the coalescing elements and the filter assembly inner wall, thereby preventing reentrainment of the coalesced liquid back into the air stream.

The present invention provides a coalescing filter assembly comprising:

a substantially conical or frustro-conical coalescing filter element mounted inside a filter housing having inlet means and outlet means; characterised in that
said inlet means sealingly communicates with the interior of the filter element such that fluid will flow from inside to outside the filter element, and the area between the filter element and the wall of the housing increases in the direction of primary phase fluid flow therebetween.

In an embodiment described hereinafter the inlet means sealingly communicates with the interior of the filter element through one end thereof and the other end thereof is closed by a closure member.

The invention also includes a coalescing filter assembly comprising:

a substantially conical or frustro-conical coalescing filter element mounted inside a filter housing having inlet means and outlet means; characterised in that
a plurality of said filter elements are mounted inside said housing and said inlet means sealingly communicates with the interior of each filter element such that fluid will flow from inside to outside each filter element, and the area between each filter element and the wall of the housing and/or adjacent filter element or elements increases in the direction of primary phase fluid flow therebetween. As will be appreciated such an assembly may be termed a multiple element coalescing filter assembly.

In such an assembly the filter elements may be sealingly mounted to respective openings provided in a sheet interposed between said inlet means and said outlet means in said housing such that flow through said inlet means will be directed to the said filter element interiors through said openings.

Preferably the filter elements are sealingly mounted to respective openings of said sheet via respective risers extending upwardly of said sheet, and further Comprising a sump provided immediately above said sheet for collecting coalesced liquids and a drain in fluid communication with said sump for draining collected fluids.

In this case a further sump may be located in said housing below said inlet means and is provided with a drain.

Also, preferably the risers have integral filter sealing surfaces at the upper ends thereof and an end cap assembly is provided for applying pressure axially to said filter elements to seal said elements between said sealing surfaces and said end cap assembly.

The or each filter element in the assembly may have a substantially conical or frustro-conical porous body formed of randomly oriented glass fibers and may also have an upper annular sealing surface and a lower annular sealing surface.

The or each filter element may include at least one layer of a suitable thin sheet material wrapped around said porous body in intimate contact therewith.

The or each filter element may further include a seamless outer support structure of sufficient rigidity to radially support said porous body and said suitable thin sheet material, said support structure completely surrounding the combination of the porous body and said outer layer of sheet material and having an inside diameter slightly smaller than the outside diameter of the combination prior to assembly therewith.

The filter element defined in the last but two paragraph may further include within said porous body a seamless inner support structure of a substantially conical or frustro-conical configuration and an inner layer of suitable sheet material wrapped around said inner support structure, and outside said porous body at least one outer layer of a suitable thin sheet material wrapped about said porous body and in intimate contact therewith and a seamless outer support structure of substantial conical or frustro-conical configuration and of sufficient rigidity to radially support said porous body and said suitable thin sheet material, said outer support structure completely surrounding the combination of said inner tubular support structure, said inner layer of said suitable sheet material, said porous body, and said outer layer of suitable sheet material and having an inside diameter slightly smaller than the outside diameter of the combination prior to assembly therewith.

The filter element having the substantially conical or frustro-conical porous body formed of randomly oriented glass fibers may be manufactured from a filter media originally in a flat sheet form, and this filter media may be pleated during the manufacturing process.

The or each filter element defined in the last but eleven paragraph may include in combination:

a) an inner support structure of substantially conical or frustro-conical configuration,

b) an inner layer of suitable sheet material wrapped around said inner support structure,

c) a porous coalescing filter body formed of randomly oriented fibers and being of substantially conical or frustro-conical shape,

d) at least one outer layer of a suitable thin sheet material wrapped about said filter body in intimate contact therewith,

e) an outer support structure of substantially conical or frustro-conical configuration and of sufficient rigidity to radially support said porous filter body and said suitable thin sheet material, said outer support body completely surrounding the combination of said inner conical support structure, said inner layer of said suitable sheet material, said porous filter body, and said outer layer of suitable sheet material and having an inside diameter substantially the same or slightly smaller than the outside diameter of the combination prior to assembly therewith.

The invention also includes a substantially conical or frustro conical filter element wherein the element has a substantially conical or frustro-conical porous body comprising a filter media made of randomly oriented fibers or from borosilicate glass, polypropylene, polyethylene, polyester, nylon, polytetrafluoroethylene, ceramic, cellulose, steel, stainless steel, inconel, monel or copper; wherein the filter element has a sealing surface on one end or on both ends and further includes at least one layer of a suitable thin sheet material wrapped around said porous body in intimate contact therewith; and wherein the filter element further includes an outer support structure of sufficient rigidity to radially support said porous body and said suitable sheet material, said outer support structure completely surrounding the combination of the porous body and said outer layer of sheet material and having an inside diameter substantially the same or slightly smaller than the outside diameter of the combination prior to assembly therewith.

Preferably, the at least one layer of sheet material is porous and has pores which are larger than the pores of the porous body.

In a preferred embodiment of the present invention, a substantially frustro-conical element is disposed in a common T-type filter housing with its smaller end being in communication with the inlet of the filter housing for coalescing oil from air. The same filter element may be used in a multiple element housing wherein the flow enters the bottom, or wide part, of the element. In both embodiments, the flow proceeds from in to out, and the annular velocity between the filter element and the wall of the filter housing will be substantially constant. Depending on the particular application, other configurations may be provided so long as the smallest end of the filter is pointed toward the direction of the primary phase flow. The media used in the filter element can be vacuum formed, pleated or wrapped, and the conical coalescing element of the present invention can be used to separate liquids from gas, or one liquid from another liquid.

In order for the invention to be well understood, the above-mentioned embodiments, which are given by way of example only, will now be described with reference to the accompanying drawings, in which like reference characters designate corresponding parts and wherein:

Fig. 1 is a diagrammatic view of a prior art cylindrical coalescing cartridge mounted in a cylindrical filter housing;

Fig. 2 is a diagrammatic view of a frustro-conical coalescing filter element mounted in a cylindrical filter housing;

Fig. 3 is an elevation view, partly in section of a T-type filter housing showing a frustro-conical coalescing filter between end caps in a cylindrical housing;

Fig. 4 is an elevational view, partly in section of a multiple element, high efficiency, coalescing filter assembly; and

Fig. 5 is a sectional view, taken in the direction of the arrows, along the section line 5-5 of Fig. 4.

It is to be understood that the invention is not limited in its application to the details of construction and arrangement of parts illustrated in the accompanying drawings, since the invention is capable of other embodiments, and of being practiced or carried out in various ways within the scope of the claims. Also, it is to be understood that the phraseology and terminology employed herein is for the purpose of description and not of limitation.

It is advantageous in designing coalescing filter assemblies to try and maximize the low rate of the fluids in the assembly, while not reducing separation efficiencies, in order to reduce the size of the housing required for a given flow rate and reduce the manufacturing cost. In doing so there are three important considerations:

1) The face velocity across the filter media.

2) The annular velocity of the primary, or continuous, phase fluid.

3) The pressure drop across the coalescing filter assembly.

The effect of face velocity upon filter performance will be governed by the fact that as face velocity increases, filter efficiency is reduced. In addition, higher face velocities will also cause higher pressure drops across the filter media and element.

As the dispersed droplets are captured by the fibers within the filter media, the rate at which they move toward the downstream surface is a function of the drag force of the continuous phase flowing through the media on the droplets. When the drag force exerted on the droplet exceeds the force of adhesion of the droplet to the fiber, the droplet will become reentrained in the fluid. The drag force is a function of the viscosity and velocity of the continuous phase fluid, and the size of the droplet, while the force of adhesion is a function of the interfacial surface tension between the droplet and the fiber.

Another objective in the design of coalescing filters is to create as large droplets as possible so as to assure they settle (or rise) and are not reentrained in the fluid flow. As the face velocity of the continuous phase liquid increases, the drag force increases. The increased drag force is capable of shearing small droplets from the fibers. After the fluid flows through the coalescing filter element, it flows between the outer surface of the element and the inner wall of the vessel. The rate at which the fluid flows within the annular space between the element and housing wall is called the annular velocity. If the annular velocity of the fluid is greater than the settling velocity of the droplets, the droplet will not settle and will remain entrained in the fluid.

Further, it is advantageous to minimize the pressure drop across the filter assembly. The pressure drop, or pressure loss, is primarily caused by the restriction of the flow through the filter media, and the restriction of the flow through the open end of the element as the fluid enters the inside of the element. The pressure drop through the filter assembly is the sum of the pressure drop through the housing and the coalescing element. The pressure drop through the element is dependent upon the permeability of the media and the surface area. The pressure drop through the housing is largely caused by the restriction of the inlet and outlet connections and the opening or restriction to the inside of the element. In designing a substantially conical or frustro-conical coalescing filter element in accordance with the present invention, the filter designer will need to take the above facts into consideration.

The annular velocity may be expressed as $V_a = Q/A_x$, where Q is the flow rate and A is the annular area between the filter element and the wall of the filter assembly. It should be understood that this is an approximate formula. Designing a filter element wherein the velocity was exactly Constant along the linear length of the filter would result in a filter having of slightly parabolic shape. While this is well within the scope of the present invention, it is not the preferred embodiment.

After the designer has decided all of the above parameters, the coalescing filter elements of the present invention may be manufactured in similar ways as the coalescing filters of the prior art. Such coalescing filters may have one or more support cores, support layers, end caps and elastomeric seals. The media may be manufactured into an seamless tube by applying a vacuum to the inside of a porous mandrel and submersing the mandrel in a slurry of fibers of various compositions as seen in U.S.-A-4,836,931 and U.S.-A-4,052,316.

It is also possible that the conical filter may be manufactured from media in a flat sheet form and rolled several times around a center core like devices seen in U.S.-A-3,802,160, U.S.-A-4,157,968, or U.S.-A-3,708,965.

The media may be manufactured in flat sheet form and rolled several times around a cylindrical mandrel, impregnated with a resin binder to offer rigidity, and the mandrel removed as seen in U.S.-A-4,006,054, and US-A-4,102,785 and U.S.-A-4,376,675.

The filter media may also be pleated. Pleating is well known in the art.

Advantages of a substantially conical or frustro-conical coalescing filter element can be best illustrated by comparing it to other conventional cylindrical coalescing filter elements. The following examples compare cylindrical elements of two sizes with frustro-conical coalescing elements which fit in a filter vessel with the same inside diameter with the respective cylindrical element. In both examples, the fluid used is natural gas at 1,000 psig (6894 kN/m$^2$ gauge) and 60°F (15.6°C).

Example 1

In a given filter vessel diameter, the frustro-conical coalescing filter element provides lower annular velocities and lower pressure drops than conventional Cylindrical elements. In Example 1, frustro conical elements are compared with cylindrical elements at the same flow rates through the comparative elements. The frustro conical element dimensions have been selected to provide approximately the same surface area as the comparable cylindrical element so that the pressure drop through the filter media is the same and, therefore, the effect on the annular velocity and pressure drop through the open (base) end cap opening by the frustro-conical element configuration is shown:

5

|  | Conventional | Conical |
|---|---|---|
| OD (top) | 2.75 in (68.9 mm) | 1.5 in (38.1 mm) |
| OD (base) | 2.75 in (68.9 mm) | 4 in (101.6 mm) |
| Length | 30 in (762 mm) | 30 in (762 mm) |
| ID (base) | 1.75 in (44.5 mm) | 3 in (76.2 mm) |
| Vessel ID | 4 in (101.6 mm) | 4 in (101.6 mm) |
| Surface Area | 1.80 ft$^2$ (0.167 m$^2$) | 1.80 ft$^2$ (0.167m$^2$) |
| Flow | 27.6ACFM (0.782 m$^3$/min) | 27.6ACFM (0.782m$^3$/min) |
| Face Vel. | 15.3 fpm (4.66 m/min) | 15.3 fpm (4.66m/min) |
| Annular Vel | 10 fps (3.05 m/s) | 6.13 fps (1.87m/s) |
| Base ID$\Delta$P | 0.24 psi (1.65 kN/m$^2$) | 0.03 psi (0.21kN/m$^2$) |

|  | Conventional | Conical |
|---|---|---|
| OD (top) | 6 in (152.4 mm) | 4 in (101.6 mm) |
| OD (base) | 6 in (152.4 mm) | 8 in (203.2 mm) |
| Length | 36 in (914.4 mm) | 36 in (914.4 mm) |
| ID (base) | 4 in (101.6 mm) | 6 in (152.4 mm) |
| Vessel ID | 8 in (203.2 mm) | 8 in (203.2 mm) |
| Surface Area | 4.71 ft$^2$ (0.437 m$^2$) | 4.72 ft$^2$ (0.438m$^2$) |
| Flow | 91.5ACFM (2.59 m$^3$/min) | 91.5ACFM (2.59m$^3$/min) |
| Face Vel. | 19.4 fpm (5.91 m/min) | 19.4 fpm (5.91m/min) |
| Annular Vel | 10 fps (3.05 m/s) | 5.83 fps (1.78m/s) |
| Base ID$\Delta$P | 0.1 psi (0.69 kN/m$^2$) | 0.02 psi (0.14 kN/m$^2$) |

In both cases, the frustro-conical element provides lower annular velocities than the cylindrical element at the same flow rate and face velocity. In addition, the pressure drop through the end cap (Base ID) is substantially lower.

Example 2

A benefit of the frustro-conical coalescing filter element design is the ability to flow more gas in a given diameter filter vessel. In Example 2, the length of the frustro-conical element has been increased to provide increased surface area compared to the referenced cylindrical element in order to flow more gas through the media at the same pressure drop (related to face velocity) and annular velocity in the vessel.

|  | Conventional | Conical |
|---|---|---|
| OD (top) | 2.75 in (68.9 mm) | 1.5 in (38.1 mm) |
| OD (base) | 2.75 in (68.9 mm) | 4 in (101.6 mm) |
| Length | 30 in (762 mm) | 49 in (1244.6 mm) |
| ID (base) | 1.75 in (44.5 mm) | 3 in (76.2 mm) |
| Vessel ID | 4 in (101.6 mm) | 4 in (101.6 mm) |
| Surface Area | 1.80 ft$^2$ (0.167 m$^2$) | 2.93 ft$^2$ (0.272m$^2$) |
| Flow | 27.6ACFM (0.782m$^3$/min) | 45ACFM (1.27m$^3$/min) |
| Face Vel. | 15.3 fpm (4.66 m/min) | 15.3 fpm (4.66m/min) |
| Annular Vel | 10 fps (3.05 m/s) | 10 fps (3.05m/s) |
| Base ID$\Delta$P | 0.24 psi (1.65 kN/m$^2$) | 0.08 psi (0.55kN/m$^2$) |

|  | Conventional | Conical |
|---|---|---|
| OD (top) | 6 in (152.4 mm) | 4 in (101.6 mm) |
| OD (base) | 6 in (152.4 mm) | 8 in (203.2 mm) |
| Length | 36 in (914.4 mm) | 62 in (1574.8 mm) |
| ID (base) | 4 in (101.6 mm) | 6 in (152.4 mm) |
| Vessel ID | 8 in (203.2 mm) | 8 in (203.2 mm) |
| Surface Area | 4.71 ft$^2$ (0.437 m$^2$) | 8.08 ft$^2$ (0.751m$^2$) |
| Flow | 91.5ACFM (2.59 m$^3$/min) | 157ACFM (4.45 m$^3$/min) |
| Face Vel. | 19.4 fpm (5.91 m/min) | 19.4 fpm (5.91m/min) |
| Annular Vel | 10 fps (3.05 m/s) | 10 fps (3.05m/s) |
| Base ID$\Delta$P | 0.1 psi (0.69 kN/m$^2$) | 0.06 psi (0.41 kN/m$^2$) |

In both cases, the frustro-conical element provides higher flow rates than the cylindrical element at the same annular velocity. In addition, the pressure drop through the end (Base ID) is substantially lower.

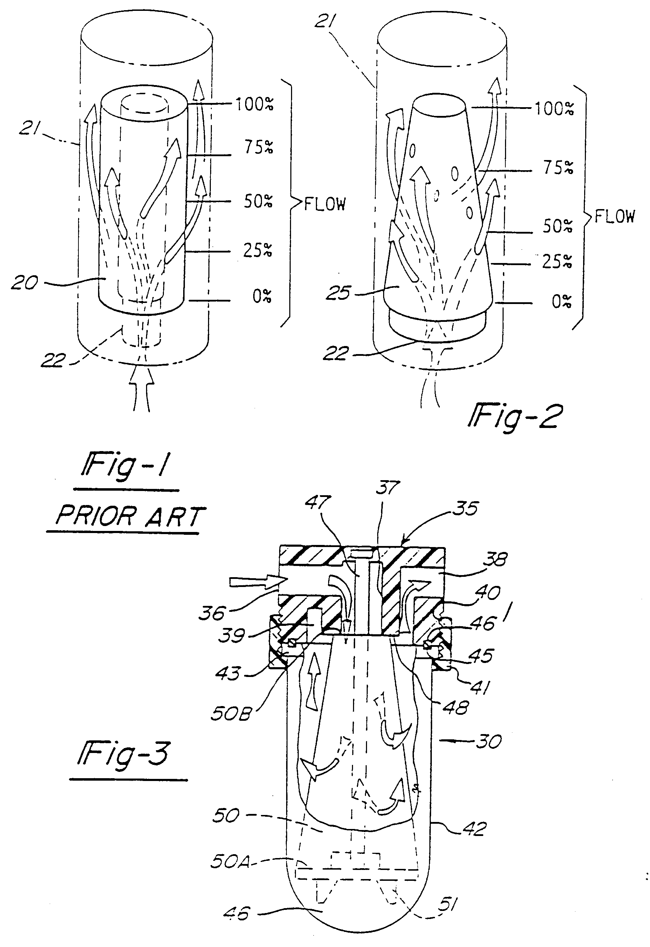

Referring now to Fig. 1, there is shown a diagrammatic view of a typical prior art filter construction wherein a hollow cylindrical filter element 20 is displaced within a cylindrical housing 21. The fluid or gas to be filtered is introduced at the inlet 22 and proceeds from the interior of the filter 20 to the exterior thereof and travels between filter element 20 and the cylindrical housing 21 until it exits the filter housing. Since the annular velocity $V_a$ can be expressed as the quotient of the flow Q divided by the area A between the filter element 20 and the filter housing 21, it can be seen that as the flow increases from 0% at the bottom of the filter element 20, to 100% at the top of the filter element, with the area constant, the velocity must be increasing. As discussed above, if the velocity becomes too great, the coalesced liquid droplets, which are normally travelling toward the bottom of the filter element 20, will be reentrained in the air stream, and the efficiency will be reduced.

In contrast, Fig. 2 shows a diagrammatic view of a frustro-conical coalescing element 25 mounted in the same filter housing 21. Again, air enters through the inlet 22 and travels upwardly. This time, because the area between the filter element 25 and filter housing 21 is increasing, by proper filter design the annular velocity can be held constant, substantially constant, or be made to decrease, depending on the particular parameters chosen by the filter designer.

Referring now to Fig. 3, there is shown a typical T-type filter assembly 30. The filter assembly has what is known in the art as a T-shaped head 35 having an inlet 36 including a central opening 37. The filter head also has an outlet 38 communicating with annular space 39. Together the inlet 36 and the outlet 38 comprise means for introducing the fluid to be filtered to the interior of the filter assembly. A threaded portion 40 is provided on the lower end of the head 35, to which a retaining ring 41 may be threadably attached. Held by the retaining ring 41 is a filters bowl 42 having a rim 43 which is pressed against an O-ring 45 mounted in a suitable groove 46 in the head 35. It can be seen that the combination of the head 35, the retaining ring 41 and the O-ring define a sealed interior space 46. The inlet 36 and the outlet 38 sealingly communicate with the interior space 46.

A filter retaining means 47 is provided centrally of the filter head 35 and is contained within the sealed interior space 46.

A frustro-conical filter element 50 having a lower end 50A and an upper end 50B, is sealingly mounted between end cap 51 which is threadably attached to retaining means 47, and the annular sealing surface 48 provided about the central opening 37. In this embodiment of the invention, the annular sealing surface 48 is provided integrally with the filter head 35, and replaces an upper end cap sometimes found in T-type filter housings.

In this manner, the conical filter element 50 has its ends 50A and 50B substantially closed between a pair of closure members, in this case annular sealing surface 48 and end cap 51, and is mounted inside a suitable filter housing having inlet means sealingly communicating with the interior of said filter, and outlet means communicating with the atmosphere.

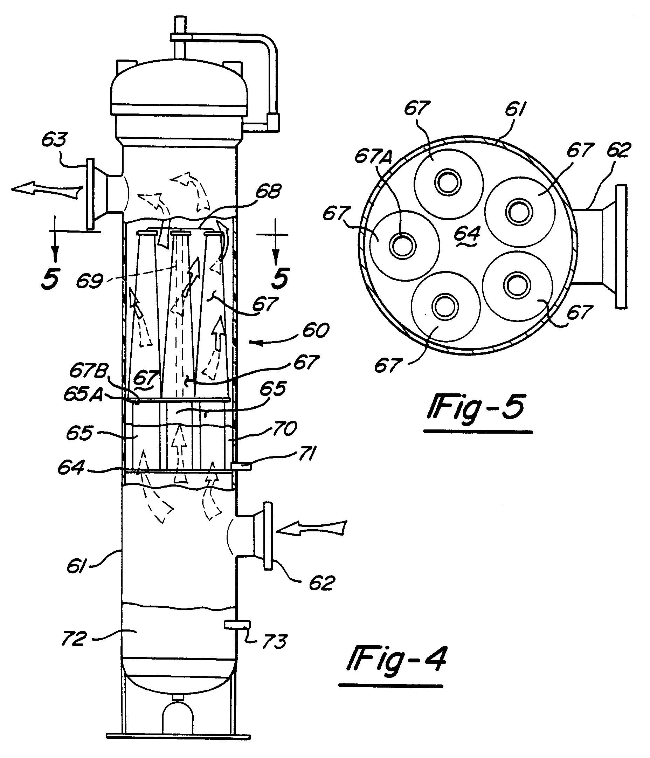

Referring now to Figs. 4 and 5, there is shown a high efficiency, multiple element, coalescing filter such as that manufactured by the Applicant, but modified to accept frustro conical conical coalescing filter elements. In this embodiment, the multi-element filter assembly 60 has a filter housing 61 having an inlet 62 and an outlet 63. Interposed between the inlet 62 and outlet 63 is a tube sheet 64 having a plurality of openings therein Communicating with risers 65 having integral end cap portions 65A thereon, to which are mounted a plurality of elongate frustro-conical filter elements 67. Depending upon the design considerations as hereinbefore discussed, the elongate filter elements 67 may be true cones having a rounded apex (not shown), or they may be frustro-conical, as shown, having upper and lower sealing surfaces (67A, 67B) and sealed between the sealing surfaces 65A of the risers and the end cap assembly 68 held in place by the retaining rod 69.

Large Contaminants and liquid slugs entering through the inlet 62 collect in a lower sump 72 and are drained through the lower drain 73. The remaining liquid aerosols are coalesced away from the gas stream and drained into the upper sump 70 away from the flow of the gas stream by the coalescing elements 67. The upper sump is drained as needed through the upper drain 71.

Thus, by carefully studying the problems present with conventional coalescing filter elements, we have developed a substantially conical or frustro-conical coalescing filter element which can be used in conventional filter assemblies for improved performance.

## Claims

1. A coalescing filter assembly (30) comprising:

   a substantially conical or frustro-conical coalescing filter element (25, 50) mounted inside a filter housing (21, 42) having inlet means (22, 36) and outlet means (38); characterised in that
   said inlet means (22, 36) sealingly communicates with the interior of the filter element (25, 50) such that fluid will flow from inside to outside the filter element, and the area between the filter element and the wall of the housing (21, 42) increases in the direction of primary phase fluid flow therebetween.

2. An assembly as claimed in claim 1, wherein said inlet means (36) sealingly communicates with the interior of the filter element (50) through one end (50B) thereof and the other end (50A) thereof is closed by a closure member (51).

3. A coalescing filter assembly (60) comprising:

   a substantially conical or frustro-conical coalescing filter element (67) mounted inside a filter housing (61) having inlet means (62) and outlet means (63); characterised in that
   a plurality of said filter elements are mounted inside said housing and said inlet means (62) sealingly communicates with the interior of each filter element (67) such that fluid will flow from inside to outside each filter element, and the area between each filter element and the wall of the housing (61) and/or adjacent filter element or elements increases in the direction of primary phase fluid flow therebetween.

4. An assembly as claimed in claim 3, wherein said filter elements (67) are sealingly mounted to respective openings provided in a sheet (64) interposed between said inlet means (62) and said outlet means (63) in said housing such that flow through said inlet means (62) will be directed to the said filter element interiors through said openings.

5. An assembly as claimed in claim 4, wherein said filter elements (67) are sealingly mounted to respective openings of said sheet (64) via respective risers (65) extending upwardly of said sheet (64), and further comprising a sump (70) provided immediately above said sheet (64) for collecting coalesced liquids and a drain (71) in fluid communication with said sump (70) for draining collected fluids.

6. An assembly as claimed in claim 5, wherein a further sump (72) is located in said housing (61) below said inlet means (62) and is provided with a drain (73).

7. An assembly as claimed in claim 5 or 6, wherein said risers (65) have integral filter sealing surfaces (65A) at the upper ends thereof and an end cap assembly (68) is provided for applying pressure axially to said filter elements to seal said elements between said sealing surfaces (65A) and said end cap assembly (68).

8. An assembly as claimed in any one of claims 1 to 7, wherein the or each filter element has a substantially conical or frustro-conical porous body formed of randomly oriented glass fibers.

9. An assembly as claimed in claim 8, wherein the or each filter element has an upper annular sealing surface and a lower annular sealing surface.

10. An assembly as claimed in claim 8 or 9, wherein the or each filter element further includes at least one layer of a suitable thin sheet material wrapped around said porous body in intimate contact therewith.

11. An assembly as claimed in claim 10, wherein the or each filter element further includes a seamless outer support structure of sufficient rigidity to radially support said porous body and said suitable thin sheet material, said support structure completely surrounding the combination of the porous body and said outer layer of sheet material and having an inside diameter slightly smaller than the outside diameter of the combination prior to assembly therewith.

12. An assembly as claimed in claim 8, wherein the or each filter element further includes within said porous body a seamless inner support structure of a substantially conical or frustro-conical configuration and an inner layer of suitable sheet material wrapped around said inner support structure, and outside said porous body at least one outer layer of a suitable thin sheet material wrapped about said porous body and in intimate contact therewith and a seamless outer support structure of substantial conical or frustro-conical configuration and of sufficient rigidity to radially support said porous body and said suitable thin sheet material, said outer support structure completely surrounding the combination of said inner tubular support structure, said inner layer of said suitable sheet material, said porous body, and said outer layer of suitable sheet material and having an inside diameter slightly smaller than the outside diameter of the combination prior to assembly therewith.

13. An assembly as claimed in any one of claims 8 to 12, wherein the or each filter element is manufactured from a filter media originally in a flat sheet form.

14. An assembly as claimed in claim 13, wherein said filter media is pleated during the manufacturing process.

15. An assembly as claimed in any one of claims 1 to 7, wherein the or each filter element includes in combination:

   a) an inner support structure of substantially conical or frustro-conical configuration,
   b) an inner layer of suitable sheet material wrapped around said inner support structure,
   c) a porous coalescing filter body formed of randomly oriented fibers and being of substantially conical or frustro-conical shape,
   d) at least one outer layer of a suitable thin sheet material wrapped about said filter body in intimate contact therewith,
   e) an outer support structure of substantially conical or frustro-conical configuration and of sufficient rigidity to radially support said porous filter body and said suitable thin sheet material, said outer support body completely surrounding the combination of said inner conical support structure, said inner layer of said suitable sheet material, said porous filter body, and said outer layer of suitable sheet material and having an inside diameter substantially the same or slightly smaller than the outside diameter of the combination prior to assembly therewith.

16. A substantially conical or frustro conical coalescing filter element (25, 50, 67), wherein the filter element has a substantially conical or frustro-conical porous body Comprising a filter media made of randomly oriented fibers or from borosilicate glass, polypropylene, polyethylene, polyester, nylon, polytetrafluoroethylene, ceramic, cellulose, steel, stainless steel, inconel, monel or copper; wherein the filter element has a sealing surface on one end or on both ends; wherein the filter element further includes at least one layer of a suitable thin sheet material wrapped around said porous body in intimate contact therewith; and wherein the filter element further includes an outer support structure of sufficient rigidity to radially support said porous body and said suitable sheet material, said outer support structure completely surrounding the combination of the porous body and said outer layer of sheet material and having an inside diameter substantially the same or slightly smaller than the outside diameter of the combination prior to assembly therewith.

**17.** A filter element as claimed in claim 16, wherein said at least one layer of sheet material is porous and has pores which are larger than the pores of the porous body.

**Patentansprüche**

**1.** Koaleszierfiltervorrichtung (30), welche aufweist:

ein im wesentlichen konisches oder kegelstumpfförmiges Koaleszierfilterelement (25, 50), welches innerhalb eines Filtergehäuses (21, 42) angebracht ist, das Einlaßeinrichtungen (22, 36) und Auslaßeinrichtungen (38) aufweist;
dadurch gekennzeichnet, daß

die Einlaßeinrichtungen (22, 36) mit dem Inneren des Filterelements (25, 50) derart abgedichtet in Verbindung stehen, daß das Fluid vom Inneren zum Äußeren des Filterelements fließt, und daß sich die Fläche zwischen dem Filterelement und der Wand des Gehäuses (21, 42) in Richtung der primären Strömung der Fluidphase vergrößert.

**2.** Vorrichtung nach Anspruch 1, wobei die Einlaßeinrichtungen (36) mit dem Inneren des Filterelements (50) durch ein Ende (50B) des Filterelements (50) abgedichtet in Verbindung steht, und wobei das andere Ende (50A) des Filterelements (50) durch ein Abschlußelement (51) abgeschlossen ist.

**3.** Koaleszierfiltervorrichtung (60), welche aufweist:

ein im wesentlichen konisches oder kegelstumpfförmiges Koaleszierfilterelement (67), welches innerhalb eines Filtergehäuses (61) mit Einlaßeinrichtungen (62) und Auslaßeinrichtungen (63) untergebracht ist;
dadurch gekennzeichnet, daß
eine Vielzahl der Filterelemente innerhalb des Gehäuses angebracht sind und die Einlaßeinrichtungen (62) mit dem Inneren jedes Filterelements (67) derart abgedichtet in Verbindung stehen, daß das Fluid vom Inneren zum Äußeren jedes Filterelements fließt, und daß sich die Fläche zwischen jedem Filterelement und der Wand des Gehäuses (61) und/oder einem angrenzenden Filterelement oder Elementen in Richtung der primären Strömung der Fluidphase vergrößert.

**4.** Vorrichtung nach Anspruch 3, wobei die Filterelemente (67) an jeweiligen Öffnungen abgedichtet angebracht sind, welche in einem Blatt (64) vorgesehen sind, welches zwischen den Einlaßeinrichtungen (62) und den Auslaßeinrichtungen (63) derart in dem Gehäuse angeordnet ist, daß sich eine durch die Einlaßeinrichtungen (62) in das Innere des Filterelements gerichtete Strömung durch die Öffnungen hindurch einstellt.

**5.** Vorrichtung nach Anspruch 4, wobei die Filterelemente (67) an den jeweiligen Öffnungen des Blattes (64) über jeweilige Steigrohre (65) abgedichtet angebracht sind, welche aus dem Blatt (64) nach oben herausragen, und wobei die Vorrichtung weiterhin einen Sumpf (70), welcher unmittelbar oberhalb des Blattes (64) vorgesehen ist, um die koaleszierten Flüssigkeiten zu sammeln, und einen Abfluß (71) aufweist, welcher in Fluidverbindung mit dem Sumpf (70) steht, um die gesammelten Flüssigkeiten abfließen zu lassen.

**6.** Vorrichtung nach Anspruch 5, wobei sich ein weiterer Sumpf (72) in dem Gehäuse (61) unterhalb der Einlaßeinrichtungen (63) befindet und mit einem Abfluß (73) versehen ist.

**7.** Vorrichtung nach Anspruch 5 oder 6, wobei die Steigrohre (65) an ihren oberen Enden integrierte Filterdichtungsflächen (65A) aufweisen, und wobei ein Endkappenaufbau (68) zur Aufbringung eines Drucks axial zu den Filterelementen vorgesehen ist, um die Elemente zwischen den Dichtungsflächen (65A) und dem Endkappenaufbau (68) abzudichten.

8. Vorrichtung nach einem der Ansprüche 1 bis 7, wobei das oder jedes Filterelement einen im wesentlichen konischen oder kegelstumpfförmigen porösen Körper aufweist, welcher aus wahllos orientierten Glasfasern ausgebildet ist.

9. Anordnung nach Anspruch 8, wobei das oder jedes Filterelement eine obere ringförmige Dichtfläche und eine untere ringförmige Dichtfläche aufweist.

10. Vorrichtung nach Anspruch 8 oder 9, wobei das oder jedes Filterelement ferner zumindest eine Schicht eines geeigneten dünnen Blattmaterials aufweist, welches in engem Kontakt um den porösen Körper gewickelt ist.

11. Vorrichtung nach Anspruch 10, wobei das oder jedes Filterelement ferner eine nahtlose äußere Stützstruktur von ausreichender Steifheit aufweist, um den porösen Körper und das geeignete dünne Blattmaterial radial zu stützen, wobei die Stützstruktur die Kombination des porösen Körpers und die äußere Schicht des Blattmaterials vollständig umgibt und einen inneren Durchmesser aufweist, welcher etwas geringer ist als der äußere Durchmesser der Kombination vor dessen Zusammenbau.

12. Vorrichtung nach Anspruch 8, wobei das oder jedes Filterelement ferner innerhalb des porösen Körpers eine nahtlose innere Stützstruktur von im wesentlichen konischer oder kegelstumpfförmiger Ausbildung und eine innere Schicht eines geeigneten Blattmaterials aufweist, welches um die innere Stützstruktur gewickelt ist, und außerhalb des porösen Körpers zumindest eine äußere Schicht eines geeigneten dünnen Blattmaterials aufweist, welches in engem Kontakt um den porösen Körper gewickelt ist, und eine nahtlose äußere Stützstruktur von im wesentlichen konischer oder kegelstumpfförmiger Konfiguration und von ausreichender Steifheit aufweist, um den porösen Körper und das geeignete dünnen Blattmaterial radial zu stützen, wobei die äußere Stützstruktur die Kombination der inneren rohrförmigen Stützstruktur, die innere Schicht des geeigneten Blattmaterials, den porösen Körper und die äußere Schicht des geeigneten Blattmaterials vollkommen umgibt und einen inneren Durchmesser aufweist, welcher etwas geringer ist als der äußere Durchmesser der Kombination vor dessen Zusammenbau.

13. Vorrichtung nach einem der Ansprüche 8 bis 12, wobei das oder jedes Filterelement aus einem Filtermedium hergestellt wird, welches sich ursprünglich in einer flachen Blattform befindet.

14. Vorrichtung nach Anspruch 13, wobei das Filtermedium während des Herstellungsverfahrens gefaltet wird.

15. Vorrichtung nach einem der Ansprüche 1 bis 7, wobei das oder jedes Filterelement in Kombination aufweist:

a) eine innere Stützstruktur von im wesentlichen konischer oder kegelstumpfförmiger Konfiguration,

b) eine innere Schicht eines geeigneten Blattmaterials, welches um die innere Stützstruktur gewickelt ist,

c) einen porösen Koaleszierfilterkörper, welcher aus wahllos orientierten Fasern aufgebaut ist und eine im wesentlichen konische oder kegelstumpfförmige Form aufweist

d) zumindest eine äußere Schicht eines geeigneten dünnen Blattmaterials, welches in engem Kontakt um den Filterkörper gewickelt ist,

e) eine äußere Stützstruktur von im wesentlichen konischer oder kegelstumpfförmiger Konfiguration und von ausreichender Steifheit, um den porösen Filterkörper und das geeignete dünne Blattmaterial radial zu stützen, wobei der äußere Stützkörper die Kombination der inneren konischen Stützstruktur, der inneren Schicht des geeigneten Blattmaterials, des porösen Filterkörpers und der äußeren Schicht des geeigneten Blattmaterials vollständig umgibt, und einen inneren Durchmesser aufweist, welcher im wesentlichen der gleiche oder etwas geringer als der äußere Durchmesser der Kombination vor dessen Zusammenbau ist.

16. Im wesentlichen konisches oder kegelstumpfförmiges Koaleszierfilterelement (25, 50, 67), wobei das Filterelement einen im wesentlichen konischen oder kegelstumpfförmigen porösen Körper aufweist, welcher ein Filtermedium aufweist, welches aus wahllos orientierten Fasern oder aus Borosilikatglas, Polypropylen, Polyethylen, Polyester, Nylon, Polytetrafluorethylen, Keramik, Zellulose, Stahl, rostfreiem Stahl, Inconel, Monelmetall, oder Kupfer aufgebaut ist; wobei das Filterelement eine Dichtungsfläche an einem Ende oder an beiden Enden aufweist; wobei das Filterelement ferner zumindest eine Schicht eines geeigneten dünnen Blattmaterials aufweist, welches in engen Kontakt um den porösen Körper gewickelt ist; und wobei das Filterelement ferner eine äußere Stützstruktur von ausreichender Steifheit aufweist, um den porösen Körper und das geeignete Blattmaterial radial abzustützen, wobei die äußere Stützstruktur die Kombination des porösen Körpers und die äußere Schicht des Blattmaterials vollständig umgibt und einen inneren Durchmesser aufweist, welcher im wesentlichen der gleiche oder etwas geringer ist als der äußere Durchmesser der Kombination vor dessen Zusammenbau.

17. Filterelement nach Anspruch 16, wobei zumindest eine Schicht des Blattmaterials porös ist und Poren aufweist, welche größer sind als die Poren des porösen Körpers.

**Revendications**

1. Ensemble formant filtre à coalescence (30), comprenant :

   un élément filtrant à coalescence (25, 50), sensiblement conique ou en cône tronqué, monté à l'intérieur d'un carter de filtre (21, 42) comportant des moyens d'admission (22, 36) et des moyens d'évacuation (38) ; caractérisé en ce que
   lesdits moyens d'admission (22, 36) communiquent, de manière étanche, avec l'intérieur de l'élément filtrant (25, 50) de telle manière que du fluide s'écoule depuis l'intérieur vers l'extérieur de l'élément filtrant, et que la zone entre l'élément filtrant et la paroi du carter (21, 42) augmente dans le sens de l'écoulement de fluide de phase primaire entre eux.

2. Ensemble selon la revendication 1, dans lequel ledit moyen d'admission (36) communique, de manière étanche, avec l'intérieur de l'élément filtrant (50) par l'intermédiaire d'une extrémité (50B) de celui-ci, l'autre extrémité (50A) étant fermée par un élément d'obturation (51).

3. Ensemble formant filtre à coalescence (60), comprenant :

   un élément filtrant à coalescence (67), sensiblement conique ou en cône tronqué, monté à l'intérieur d'un carter de filtre (61) comportant un moyen d'admission (62) et un moyen d'évacuation (63) ; caractérisé en ce que plusieurs desdits éléments filtrants sont montés à l'intérieur dudit carter et en ce que ledit moyen d'admission (62) communique, de manière étanche, avec l'intérieur de chaque élément filtrant (67) de telle manière que du fluide s'écoule depuis l'intérieur vers l'extérieur de chaque élément filtrant, et que la zone entre chaque élément filtrant et la paroi du carter (61) et/ou de l'élément ou des éléments filtrant(s) adjacent(s) augmente dans le sens de l'écoulement de fluide de phase primaire entre eux.

4. Ensemble selon la revendication 3, dans lequel lesdits éléments filtrants (67) sont montés, de manière étanche, sur des ouvertures respectives prévues dans une plaque (64) intercalée entre ledit moyen d'admission (62) et ledit moyen d'évacuation (63) dans ledit carter, de telle manière que le flux passant dans ledit moyen d'admission (62) soit dirigé vers l'intérieur desdits éléments filtrants, par l'intermédiaire desdites ouvertures.

5. Ensemble selon la revendication 4, dans lequel lesdits éléments filtrants (67) sont montés, de manière étanche, sur des ouvertures respectives de ladite plaque (64), au moyen de colonnes montantes (65) respectives, qui s'étendent vers le haut à partir de ladite plaque (64), et qui comprend en outre un collecteur (70), prévu immédiatement au-dessus de ladite plaque (64) pour récupérer les liquides soumis à coalescence, et une vidange (71), en communication de fluide avec ledit collecteur (70), pour l'évacuation des fluides collectés.

6. Ensemble selon la revendication 5, dans lequel un collecteur (72) supplémentaire est situé dans ledit carter (61), au-dessous dudit moyen d'admission (62) et est pourvu d'une vidange (73).

7. Ensemble selon la revendication 5 ou 6, dans lequel lesdites colonnes montantes (65) présentent, au niveau de leurs extrémités supérieures, des surfaces d'étanchéité d'un seul tenant (65A), et un ensemble formant couvercle d'extrémité (68) est prévu pour appliquer une pression axialement auxdits éléments filtrants, afin d'obturer lesdits éléments filtrants entre lesdites surfaces d'étanchéité (65A) et ledit ensemble formant couvercle d'extrémité (68).

8. Ensemble selon l'une quelconque des revendications 1 à 7, dans lequel l'élément ou chaque élément filtrant comporte un corps poreux, sensiblement conique ou en cône tronqué, formé de fibres de verre à orientation aléatoire.

9. Ensemble selon la revendication 8, dans lequel l'élément ou chaque élément filtrant présente une surface annulaire supérieure d'étanchéité et une surface annulaire inférieure d'étanchéité.

**10.** Ensemble selon la revendication 8 ou 9, dans lequel l'élément ou chaque élément filtrant comprend, en outre, au moins une couche d'un matériau adéquat en feuillard enroulé autour dudit corps poreux et en contact étroit avec celui-ci.

**11.** Ensemble selon la revendication 10, dans lequel l'élément ou chaque élément filtrant comprend, en outre, une structure extérieure de support sans soudure, de rigidité suffisante pour soutenir radialement ledit corps poreux et ledit matériau adéquat en feuillard, ladite structure de support entourant complètement la combinaison, constituée par le corps poreux et ladite couche extérieure en feuillard, et ayant un diamètre intérieur légèrement plus petit que le diamètre extérieur de la combinaison préalablement à l'assemblage avec celle-ci.

**12.** Ensemble selon la revendication 8, dans lequel l'élément ou chaque élément filtrant comprend, en outre, à l'intérieur dudit corps poreux, une structure intérieure de support sans soudure, de forme sensiblement conique ou en cône tronqué, et une couche intérieure en un matériau adéquat en feuillard enroulé autour de ladite structure intérieure de support et, extérieurement audit corps poreux, au moins une couche extérieure en un matériau adéquat en feuillard enroulé autour dudit corps poreux et en contact étroit avec celui-ci, et une structure extérieure de support sans soudure, de forme sensiblement conique ou en cône tronqué et de rigidité suffisante pour soutenir radialement ledit corps poreux et ledit matériau adéquat en feuillard, ladite structure extérieure de support entourant complètement la combinaison, constituée par ladite structure tubulaire intérieure de support, ladite couche intérieure faite dudit matériau adéquat en feuillard, ledit corps poreux et ladite couche extérieure en un matériau adéquat en feuillard, et ayant un diamètre intérieur légèrement plus petit que le diamètre extérieur de la combinaison préalablement à l'assemblage avec celle-ci.

**13.** Ensemble selon l'une quelconque des revendications 8 à 12, dans lequel l'élément ou chaque élément filtrant est fabriqué à partir d'un moyen filtrant, se présentant à l'origine sous la forme d'une tôle plate.

**14.** Ensemble selon la revendication 13, dans lequel ledit moyen filtrant est plissé au cours du processus de fabrication.

**15.** Ensemble selon l'une quelconque des revendications 1 à 7, dans lequel l'élément ou chaque élément filtrant comprend, en association :

   a) une structure intérieure de support de forme sensiblement conique ou en cône tronqué,
   b) une couche intérieure en un matériau adéquat en feuillard enroulé autour de ladite structure intérieure de support,
   c) un corps filtrant poreux à coalescence, formé de fibres à orientation aléatoire, et de forme sensiblement conique ou en cône tronqué,
   d) au moins une couche extérieure en un matériau adéquat en feuillard enroulé autour dudit corps filtrant et en contact étroit avec celui-ci,
   e) une structure extérieure de support, de forme sensiblement conique ou en cône tronqué et de rigidité suffisante pour soutenir radialement ledit corps filtrant poreux et ledit matériau adéquat en feuillard, ladite structure extérieure de support entourant complètement la combinaison, constituée par ladite structure conique intérieure de support, ladite couche intérieure faite dudit matériau adéquat en feuillard, ledit corps filtrant poreux et ladite couche extérieure en un matériau adéquat en feuillard, et ayant un diamètre intérieur sensiblement identique ou légèrement inférieur au diamètre extérieur de la combinaison préalablement à l'assemblage avec celle-ci.

**16.** Elément filtrant à coalescence (25, 50, 67), sensiblement conique ou en cône tronqué, dans lequel l'élément filtrant comporte un corps poreux, sensiblement conique ou en cône tronqué, comprenant un moyen filtrant fait de fibres à orientation aléatoire, ou à partir de verre borosilicaté, de polypropylène, de polyéthylène, de polyester, de Nylon, de polytétrafluoréthylène, de céramique, de cellulose, d'acier, d'acier inoxydable, d'Inconel, de Monel ou de cuivre ; dans lequel l'élément filtrant présente une surface d'étanchéité sur une extrémité ou sur les deux extrémités ; dans lequel l'élément filtrant comprend, en outre, au moins une couche en un matériau adéquat en feuillard enroulé autour dudit corps poreux et en contact étroit avec celui-ci ; et dans lequel l'élément filtrant comprend, en outre, une structure extérieure de support, de rigidité suffisante pour soutenir radialement ledit corps poreux et ledit matériau adéquat en feuillard, ladite structure extérieure de support entourant complètement la combinaison, constituée par le corps poreux et ladite couche extérieure en feuillard, et ayant un diamètre intérieur sensiblement identique ou légèrement inférieur au diamètre extérieur de la combinaison préalablement à l'assemblage avec celle-ci.

**17.** Elément filtrant selon la revendication 16, dans lequel ladite au moins une couche en feuillard est poreuse et comporte des pores qui sont plus grands que les pores du corps poreux.

_Fig-1_

PRIOR ART

_Fig-2_

_Fig-3_

**Fig-4**

**Fig-5**